Europäisches Patentamt

European Patent Office

Office européen des brevets

(11) Veröffentlichungsnummer: **0 381 014**
**A2**

## (12) EUROPÄISCHE PATENTANMELDUNG

(21) Anmeldenummer: **90101284.9**

(22) Anmeldetag: **23.01.90**

(51) Int. Cl.⁵: **A01B 49/06**

(30) Priorität: **31.01.89 DE 3902757**

(43) Veröffentlichungstag der Anmeldung:
**08.08.90 Patentblatt 90/32**

(84) Benannte Vertragsstaaten:
**AT DE FR GB NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Siefken, Claus**
**Bookhorn 29**
**D-2875 Ganderkesee 1(DE)**

(54) **Sägerät und Bodenwalze.**

(57) Sägerät, bestehend aus einer Bodenwalze mit schmalen nebeneinander angeordneten Ringen und hinter der Bodenwalze angeordneten Saatausläufen einer Sämaschine, insbesondere für Getreide. Um eine verstopfungsfreie Bodenwalze mit einfachsten Mitteln zu schaffen, ist vorgesehen, daß an die Saatausläufe Säschare (9) angeordnet sind und, daß die Ringe (6) zumindest in ihrem auf dem Boden abrollenden Bereich elastisch sind und zwar derart, daß ein Selbstreinigungseffekt der Ringe (6) erreicht wird.

FIG. 1

EP 0 381 014 A2

## Sägerät und Bodenwalze

Die Erfindung betrifft ein Sägerät und Bodenwalze gemäß der Oberbegriffe der Ansprüche 1 und 4.

Ein derartig ausgebildetes Sägerät ist durch die DE-OS 20 01 062 bekannt. Dieses Sägerät besteht aus einer Drillmaschine mit einem Vorratsbehälter, einer Austrag-und Dosiereinrichtung und einem Stufengetriebe. Unterhalb des Vorratsbehälters ist im Rahmen der Drillmaschine eine ungeteilt, aus einzelnen starren Ringen gebildete Ringelwalze um eine quer zur Fahrtrichtung gerichtete Achse rotierend angeordnet. Die Saatleitungen sind in den Profilkämmen der Ringe angeordnet und weisen Ausläufe auf, welche sich unterhalb der Achse der Ringelwalze und oberhalb der Bodenoberfläche befinden. Der Antrieb der Säwelle erfolgt unter Zwischenschaltung des Stufengetriebes von der Ringelwalze. Durch die Ringelwalze werden in den vorbereiteten Ackerboden kontinuierlich fortlaufende Dämme und Furchen geformt, wobei gleichzeitig der Oberflächenbereich des Ackerbodens verdichtet wird. In diese geformten Furchen werden dann die Saatkörner abgelegt und durch ein der Ringelwalze gegenüber nachlaufend angeordnetes Bodenbearbeitungsgerät werden dann die Kämme der Dämme umgebrochen und als loses Erdreich auf die in den Furchen abgelegten Saatkörner geschüttet. Die einzelnen Ringe der Ringelwalze dienen also zur Bodenverdichtung und zum Erzeugen der jeweiligen Säfurche, wobei es trotz verschiedenster Vorkehrungen zum Anbacken von Erdreich in die Profilierung dieser Bodenwalze kommt. Hierdurch kommt es dann schnell zu Verstopfungen der Bodenwalze, wodurch das ordnungsgemäße Erzeugen der Säfurche und damit die Saatgutablage sowie die Funktionsweise hinsichtlich der Bodenverdichtung nicht gewährleistet ist.

Der Erfindung liegt die Aufgabe zugrunde, für eine gattungsgemäße Maschine eine verstopfungsfreie Bodenwalze mit einfachsten Mitteln zu schaffen, so daß das Saatgut optimal im Boden abzulegen ist und optimale Keimbedingungen vorfindet.

Diese Aufgabe wird in erfindungsgemäßer Weise dadurch gelöst, daß an die Saatausläufe Säschare angeordnet sind, und daß die Ringe zumindest in ihrem auf dem Boden abrollenden Bereich elastisch sind und zwar derart, daß ein Selbstreinigungseffekt der Ringe erreicht wird.

Infolge dieser Maßnahmen läßt sich auf einfachste Weise eine verstopfungsfreie Bodenwalze herstellen, wobei die schmalen, nebeneinander angeordneten Ringe eine derartige Elastizität aufweisen, daß sich eine selbstreinigende Wirkung der einzelnen Ringe ergibt. Die Anordnung von Säscharen an die Saatausläufe garantiert eine gleichmäßige Saatgutablage der Saatkörner im Boden.

Damit sich auch eine einfache Konstruktion der Bodenwalze ergibt, ist erfindungsgemäß vorgesehen, daß die Walze aus mehreren nebeneinander angeordneten Ringen besteht, welche auf einem Traggerüst angeordnet sind.

In einer besonders bevorzugten Ausführungsform ist erfindungsgemäß vorgesehen, daß die Säschare in Fahrtrichtung gesehen fluchtend zu den Ringen angeordnet sind, so daß sie in dem von den Ringen verfestigten Bereich das Saatgut im Boden ablegen. Hierdurch wird das Saatgut in besonders vorteilhafter Weise in die einen Abstand, entsprechend dem jeweiligen Säscharabstand, zueinander aufweisenden verdichteten Streifen abgelegt, so daß sich günstige Wachstumsbedingungen für das im Boden abgelegte Saatgut ergeben.

Weitere Einzelheiten der Erfindung sind der Beispielsbeschreibung und den Zeichnungen zu entnehmen. Hierbei zeigt

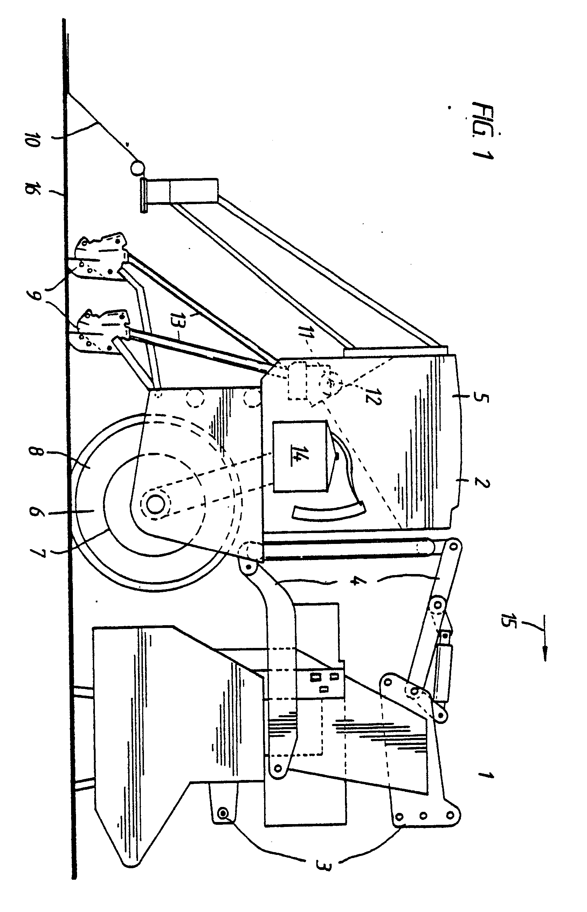

Fig. 1 eine Bestellkombination mit der in erfindungsgemäßer Weise ausgerüsteten Sämaschine in Prinzipdarstellung und in der Seitenansicht und

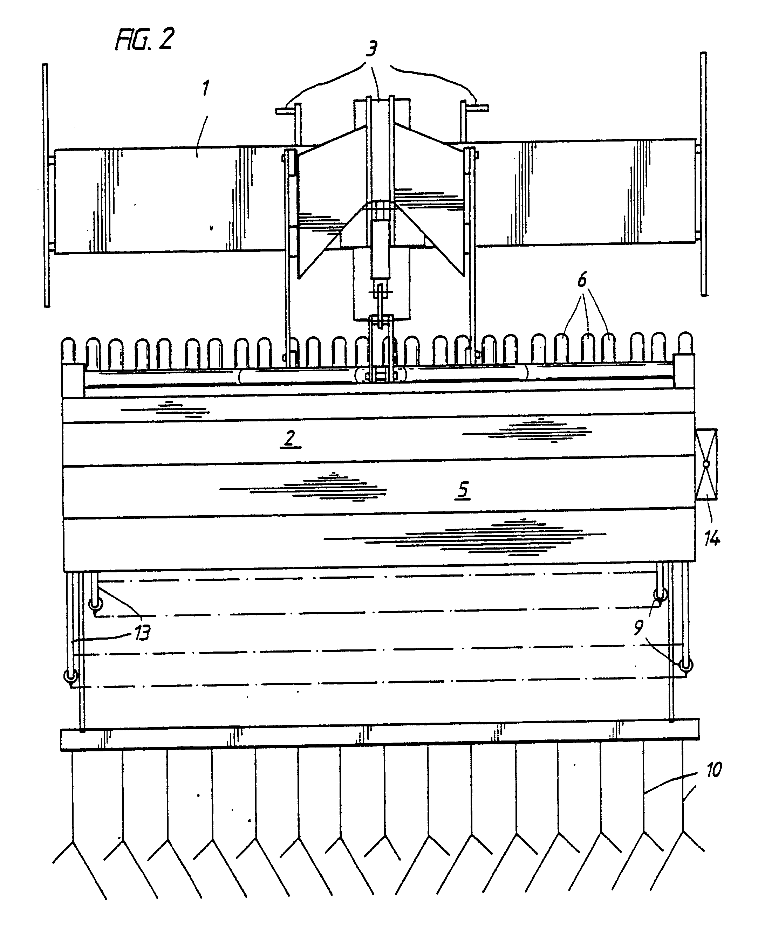

Fig. 2 die Bestellkombination gemäß Fig. 1 in der Ansicht von oben.

Die Bestellkombination besteht aus dem zapfwellengetriebenen Bodenbearbeitungsgerät 1 und der Drillmaschine 2. Das Bodenbearbeitungsgerät 1 ist als Kreiselegge ausgebildet und weist die Dreipunktkupplungselemente 3 auf, mit der die Bestellkombination an einen Ackerschlepper anschließbar ist. Über die Dreipunktkupplungsvorrichtung 4 ist die Drillmaschine 2 mit dem Bodenbearbeitungsgerät 1 verbunden. Die Drillmaschine 2 weist den Vorratsbehälter 5, das aus mehreren nebeneinander angeordneten Ringen 6, welche auf dem Traggerüst 7 angeordnet sind und das Fahrwerk 8 der Drillmaschine 2 bilden, die Säschare 9 und den Saatstriegel 10 auf. Den Säscharen 9 werden die sich im Vorratsbehälter 5 befindlichen, auszubringenden Materialien mittels der auf der Säwelle 11 angeordneten Dosierräder 12 über die Saatleitungsrohre 13 zugeführt. Die Säwelle 11 wird über das stufenlos einstellbare Ölbadgetriebe 14 von dem Fahrwerk 8 der Drillmaschine 2 angetrieben.

Die auf dem Traggerüst 7 angeordneten Ringe 6 sind aus einem elastischen Kunststoff hergestellt und derart auf dem Traggerüst 7 angeordnet, daß die Säschare 9 in Fahrtrichtung 15 gesehen fluchtend zu den Ringen 6 angeordnet sind, so daß die Säschare 9 in dem von den Ringen 6 verfestigten Bereich das Saatgut im Boden 16 ablegen. Durch die Herstellung der Ringe 6 aus elastischem Kunststoff weisen diese Ringe 6 eine derartige Elastizität auf, so daß sich ein Selbstreinigungseffekt dieser Ringe 6 ergibt und kein Erdreich an diesen Ringen 6 mehr festhaftet.

Zum Schließen der von den Säscharen 9 in den Boden 16 erzeugten Säfurchen dient der Saatstriegel 10. Hierdurch wird gewährleistet, daß das im Boden abgelegte Saatgut mit einer dünnen Bodenschicht bedeckt wird, so daß das Saatgut ordnungsgemäß auflaufen kann. Dadurch, daß das Saatgut in die verfestigten Bereiche der Ringe 6 im Boden 16 abgelegt wird, ergeben sich optimale Wachstumsbedingungen der im Boden abgelegten Saatgüter.

**Ansprüche**

1. Sägerät, bestehend aus einer Bodenwalze mit schmalen nebeneinander angeordneten Ringen und hinter der Bodenwalze angeordneten Saatausläufen einer Sämaschine, insbesondere für Getreide, dadurch gekennzeichnet, daß an die Saatausläufe Säschare (9) angeordnet sind und, daß die Ringe (6) zumindest in ihrem auf dem Boden abrollenden Bereich elastisch sind und zwar derart, daß ein Selbstreinigungseffekt der Ringe (6) erreicht wird.

2. Sägerät nach Anspruch 1, dadurch gekennzeichnet, daß die Walze (8) aus mehreren nebeneinander angeordneten Ringen (6) besteht, welche auf einem Traggerüst (7) angeordnet sind.

3. Sägerät nach Anspruch 1, dadurch gekennzeichnet, daß die Ringe (6) aus einem elastischen Kunststoff bestehen.

4. Bodenwalze mit schmalen nebeneinander angeordneten Ringen, dadurch gekennzeichnet, daß die Ringe (6) aus einem elastischen Kunststoff bestehen.

5. Bodenwalze nach Anspruch 4, dadurch gekennzeichnet, daß die Ringe (6) aus einem elastischen Kunststoff bestehen.

6. Sägerät oder Bodenwalze nach einem der vorstehenden Ansprüche, dadurch gekennzeichnet, daß die Säschare (9) in Fahrtrichtung (15) gesehen fluchtend zu den Ringen (6) angeordnet sind, so daß sie in dem von den Ringen (6) verfestigten Bereich das Saatgut im Boden (16) ablegen.

FIG. 1

FIG. 2